# EUROPEAN PATENT SPECIFICATION

(11) **EP 0 620 327 B1**
(45) Date of publication and mention of the grant of the patent: **01.12.1999**
(21) Application number: 94302550.2
(22) Date of filing: 12.04.1994
(51) Int. Cl.: E03B 7/07, E03B 7/00, F16K 37/00

(54) **Fluid distribution system**
Fluidverteilungssystem
Système de distribution de fluide

(30) Priority: 13.04.1993 GB 9307553
(43) Date of publication of application: 19.10.1994
(73) Proprietor: YORKSHIRE WATER SERVICES LTD., Bradford, West Yorkshire BD6 2LZ (GB)
(72) Inventor: Quinn, Christopher Frederick, Cottingley, Bingley BD16 1QR (GB)
(74) Representative: Neill, Alastair William

(56) References cited:
- DE-A- 2 944 285
- FR-A- 2 668 239
- FR-A- 2 678 967
- US-A- 4 590 963

## Description

This invention relates to a fluid distribution system and a valve system for a fluid distribution system. The invention is of particular interest in relation to a water distribution system, but may have application to distribution of other fluids, whether liquids or gases.

Water distribution systems are generally divided into a series of zones for control of water pressure and leakage. Valves are closed, to define the boundaries between zones. In practice this means that some valves in a water distribution system are required to be kept closed, and the majority left open. However, day to day operations - repair of burst conduits, modification and extension of the water distribution system, and re-zoning - means that closed valves need to be opened, and open valves need to be closed.

At present, it is not generally possible to exercise close control of a water distribution system, because there is inadequate information on the status of the valves in the system, that is to say, which valves are currently open, and which are closed. To rectify this is not simply a matter of setting in place, for example, a paper-based logging scheme, whereby an operator passes back information on the operations he has carried out, and the status of the valves he has worked on, to a logging station. This is because the valve operator may be uncertain of the valves on which he has worked. Equally, if he is sent out to close certain valves, it is difficult for him to be certain that he has closed the correct valves. This is because it is sometimes very difficult to identify particular valves from records of their location.

A further problem with a conventional water distribution network comprising a network of conduits and valves is that the network includes very many valves, which may have been installed over a period of one hundred years or so. A large variety of different valve types are found in a single network, the valve types including a large variety of valve heads of different shapes and sizes, by means of which each valve can be opened or closed by engagement with a correspondingly shaped valve key. It is estimated that in a single network, there may be as many as seventy or more different types of valve head, and this may require seventy or more corresponding valve keys, with attendant storage, transport and availability problems.

An object of the present invention is to address some of the abovementioned problems.

FR-A-2 668 239 discloses a valve system according to the preamble of claim 1, the system comprising a valve provided with a storage device having openings. Some of the openings contains pastilles in order to identify the valve. A valve key is provided with a storage device reader having electrical sensors which detect whether a pastille is present or not, the sensing device thus being capable of receiving information stored by the device associated with the valve and transfer of information between the valve and the valve key takes place.

FR-A-2 678 967 discloses a type of valve which is mechanically adapted to enable certain information about the valve to be obtained by visual inspection of the valve.

US-A-4 590 963 discloses a valve system in which information about the condition of a valve can be obtained electrically, but a special signal generator has to be coupled to the valve and a special transceiver has to be provided for use with the signal generator.

The invention provides a valve system comprising: a valve, rotatable between open and closed conditions; a valve key releasably connectible to the valve to rotate the valve; and means to provide information about the valve comprising an information storage device associated with the valve, and a sensing device located in the valve key, the sensing device being capable of receiving information from the storage device when the valve key is connected to the valve, the valve key being capable of obtaining information yielded up by each of a plurality of valves, wherein the value system comprises a central valve logging station, the valve key in turn being adapted to yield the information thereto.

The operator, having identified a valve which he is required to check or change the status of, can relay information on its status to a valve logging station.

Some or all of the valves in the fluid distribution system may be adapted to yield up information. Preferably the system comprises a plurality of information-gathering valve keys, one for each operator.

Preferably, such a valve key has a memory, whereby it stores information both on the identity and status of a valve, which information is subsequently yielded up to the valve logging station.

The valve key may be provided with a removable magnetic storage device, for example a diskette, which is passed to the valve logging station, for downloading.

Another possibility is that information yielded up to the valve key may be transmitted by radio to the valve logging station. Preferably, the information is stored in a memory contained within the valve key. Suitably, information is taken from the memory and relayed by radio to the valve logging station, after the valve key has been removed from the valve. This could conveniently be achieved by placing the valve key in an information downloading device, conveniently located in an operator's van, which is fitted with, for example, a radio cellular telephone. Preferably, information could be extracted by means of an inductive or magnetic coupling, one part of said coupling being associated with the head of the valve key, and the other being within the downloading device, and associated with the input to a radio transmitter, within the van. Inductive couplings are already used in certain water meters and need not be described further herein. A suitable magnetic coupling may comprise, for example, an array of magnets on the valve and an array of magnetic sensing devices on the valve key. The different valves in the system adapted to yield up information have different arrays of magnets. A magnetic sensing device on the valve key may provide an electrical signal only when a magnet is adjacent to it. The presence or absence of such signals is used to generate a binary number which denotes the valve.

Suitably means are provided for providing the operator with a warning, for example an audible signal, should he attempt to drive the vehicle without the valve key in the holster.

Suitably, a battery for the valve key could be recharged, whilst the valve key is located in the downloading device, from the battery of the vehicle.

Preferably, a valve key has means for sensing the direction in which it rotates a valve spindle, and means for sensing the number of times that it has rotated the valve spindle. By such means the status of the valve can be determined.

Suitably a valve which is adapted to yield up information on its identity and status has a spindle of non-standard form, to be engaged and driven by the valve key. For example a pentagonal drive connection may be used. This is to reduce the risk of valves being open or closed and, hence, the system being undermined, by unauthorised operators.

The valve may carry a bracket extending upwardly, on which is mounted a permanent magnet. The valve key may have means, for example, a switch, sensitive to the permanent magnet, and located substantially at the same level thereof when the valve key is engaged with the valve. Thus, such a switch provides a signal once during each revolution of the valve key and spindle, when adjacent to the permanent magnet.

The valve may have valve identification means which is sensed by an inductive device located within the valve key.

Suitably, the valve key has upper and lower parts which are engaged together with one at least partially nesting within the other, the two parts being drivably connected together by means of a lost motion connection, with a pin on one part cooperating with a slot on the other part, such that when the pin engages one end of the slot, the upper part may rotate the lower part in a first sense, and when the pin engages the other end of the slot, the upper part may rotate the lower part in a second, opposite sense, the valve key having means for sensing which of these positions the pin is in, and, therefore, whether the key, and hence the valve spindle, it being rotated in the first or second direction.

Further aspects of the present invention are described in the attached claims.

Specific embodiments and methods according to the above aspects will now be further described, by way of example, with reference to the accompanying schematic drawings in which Figures 1 to 3 refer to a first specific embodiment and method, wherein;
Fig. 1 represents a valve key engaged with a valve;
Fig. 2 represents a valve key downloading unit; and
Fig. 3 schematically shows a valve key downloading unit located in an operator's van; and
Figures 4 to 11 refer to a second specific embodiment and method, wherein;

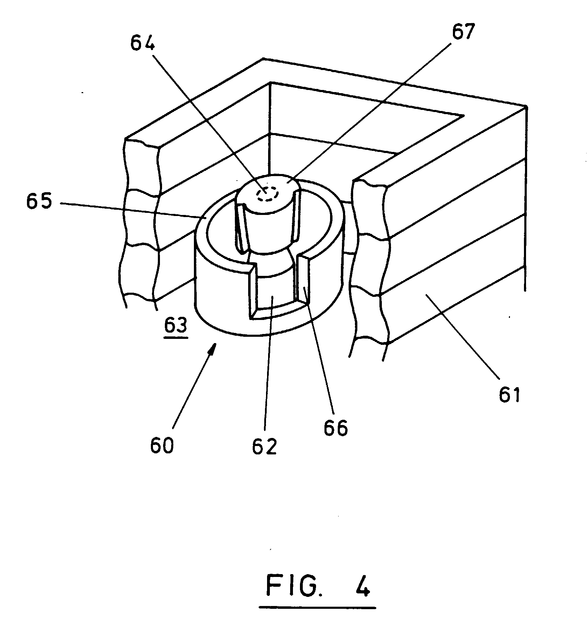

Figure 4 shows a valve in situ in a ground site, the value fitted with a valve cap, and a valve key location collar fitted around the valve;

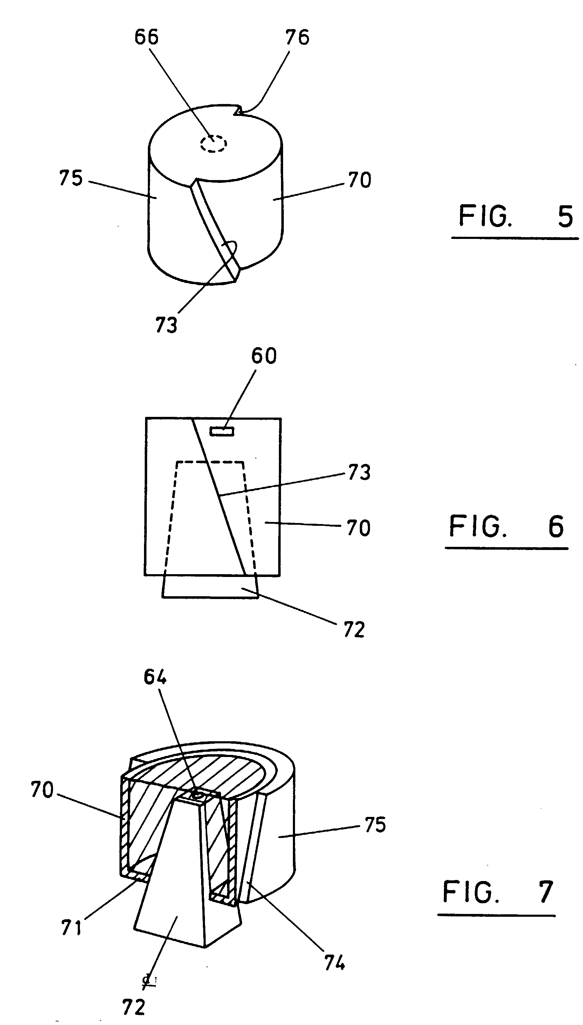

Figure 5 shows a second valve key for rotating and monitoring a valve fitted with the valve cap;
Figure 6 shows an upper portion of the second valve key in cut away view;
Figure 7 shows a cut away view of the value cap;

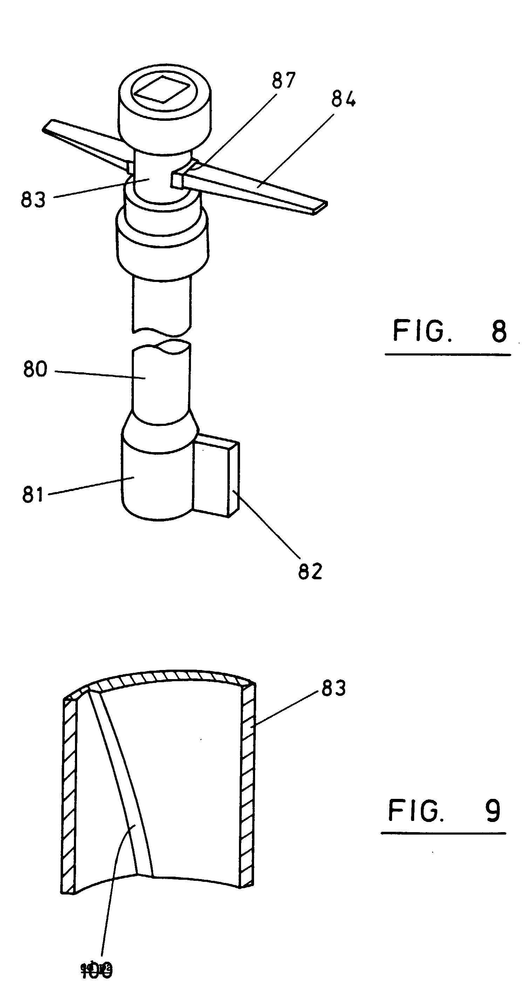

Figure 8 shows a second valve key;
Figure 9 shows a lower portion of the second valve key, in cut away view;

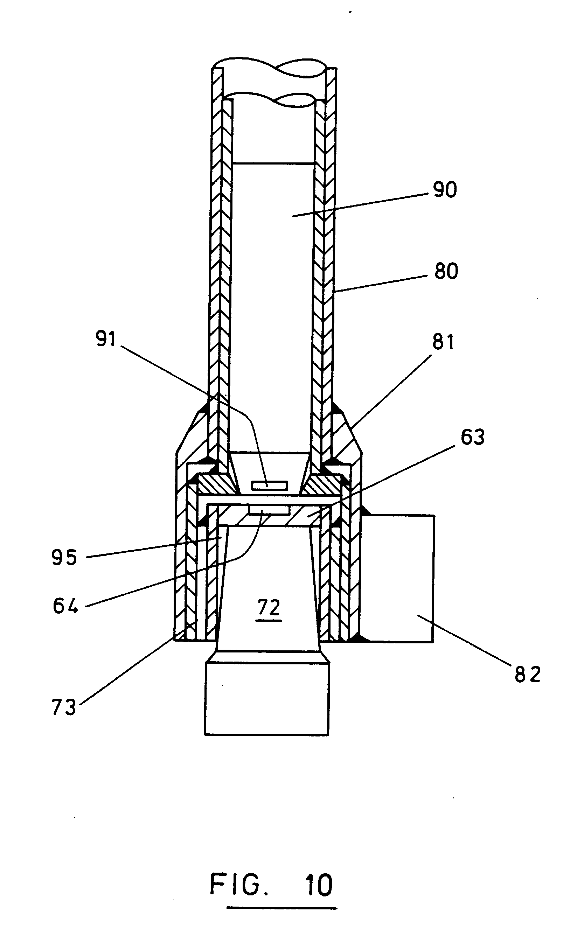

Figure 10 shows in side view the valve cap as fitted over a prior art valve head; and

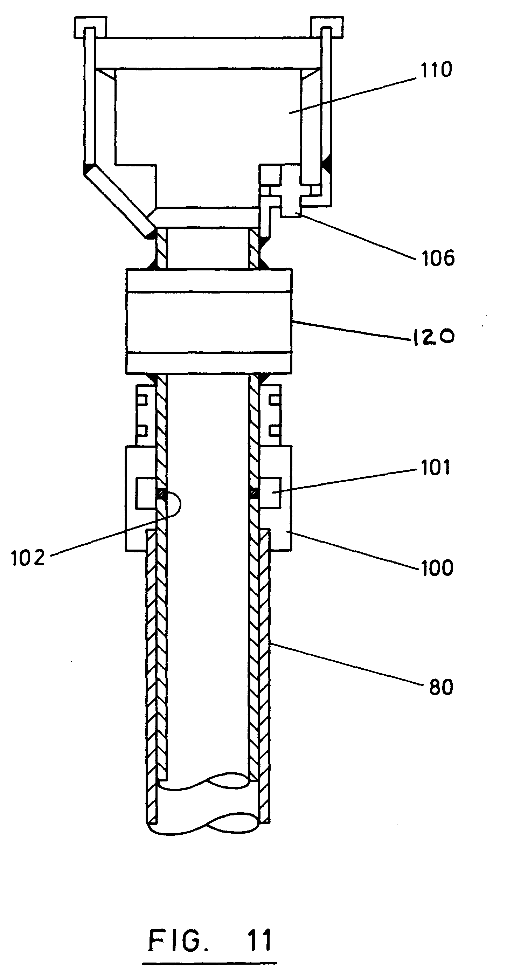

Figure 11 shows in partial cut away view, a portion of an outer casing of the second valve key for engaging the valve cap.

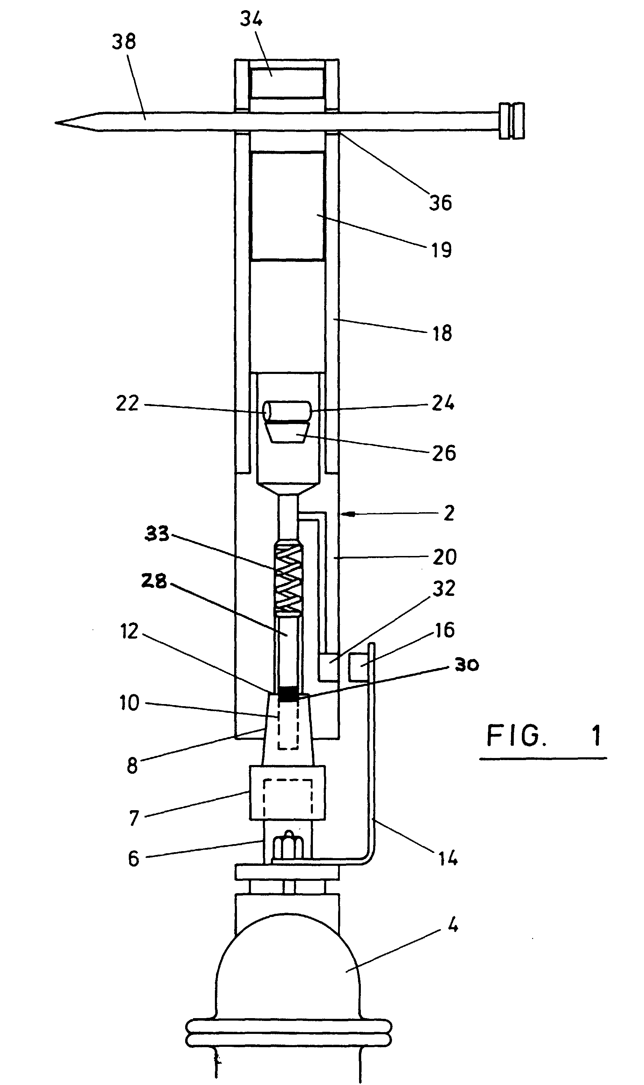

As shown in Fig. 1, a valve key 2 is engaged in driving connection with a valve body 4 which is part of a potable water distribution system.

The valve body 4, a standard part, is modified. Thus carried on the square-section valve spindle 6 is a "false top" 7, comprising a spindle head 8 which tapers away from the valve, and is of pentagonal cross-section. Within the spindle head 8 is located a valve identification capsule 10. The spindle head 8 terminates in a horizontal end face 12.

Carried by the valve is an upwardly directed bracket 14 carrying at its upper end a permanent magnet 16.

The valve key 2 comprises two generally tubular bodies. An upper tubular body 18 partially embraces a lower tubular body 20. The bodies 18, 20 are connected together by means of a pin 22 carried diametrically by the upper body 18, located in and extending between opposed slots 24 formed in the wall of the lower body 20. Thus, the direction of rotation of the valve key is determined by which end of the slots is engaged by the pin. The pin position is detected by proximity sensor means 26. For example the pin may be a permanent magnet and the proximity sensor means may comprise Reed switches.

Within the lower end of the valve key 2 is a sensor device 28 terminating in a lower horizontal end face 30. When the valve key is engaged with the valve, as shown, the end face 30 is closely adjacent to the end face 12 of the valve "false top". The end faces 30 and 12 form an inductive coupling by means of which valve identification information is yielded up to the valve key. Also located within the lower end of the valve key is a Reed switch 32 which is actuated each time it comes into proximity with the magnet 16 carried by the valve.

The sensor device 28 is spring mounted within the lower end of the valve key by means of a helical spring 33. This helps to prevent the sensor device from being damaged, in the event that there is debris on the end face 12 of the valve false top, when the valve key is engaged with it.

The upper part 18 of the valve key contains a control unit 19 comprising a rechargeable battery and a memory. The memory is arranged to store the valve identification information, the direction of rotation (determined by the proximity sensor means 26), and the number of turns of the valve spindle (determined by the Reed switch 32). It is also arranged to store the time of operation, and permanently stores the identification of the valve key.

At the top of the valve key is an LED display 34, which immediately displays the information identifying the particular valve. This means that the operator knows immediately whether or not he has found the intended valve.

The top of the valve key is formed with holes 36 through which a tommy bar 38 is engaged, to turn the valve key.

The operator is under instruction to effect at least one opening or closing operation. If his instruction is to open a valve, and, as expected, he finds it closed, he simply opens the valve. However, if he finds the valve already open, he is under instruction to close the valve and then to open it. By this means unambiguous information as to the final valve status, that is, whether it is left open or closed, can be provided.

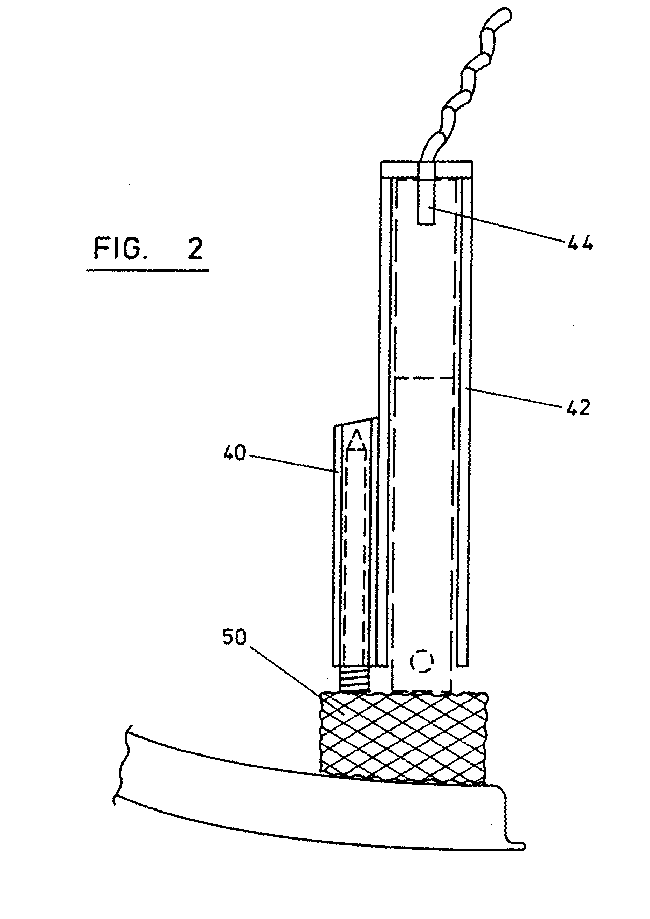

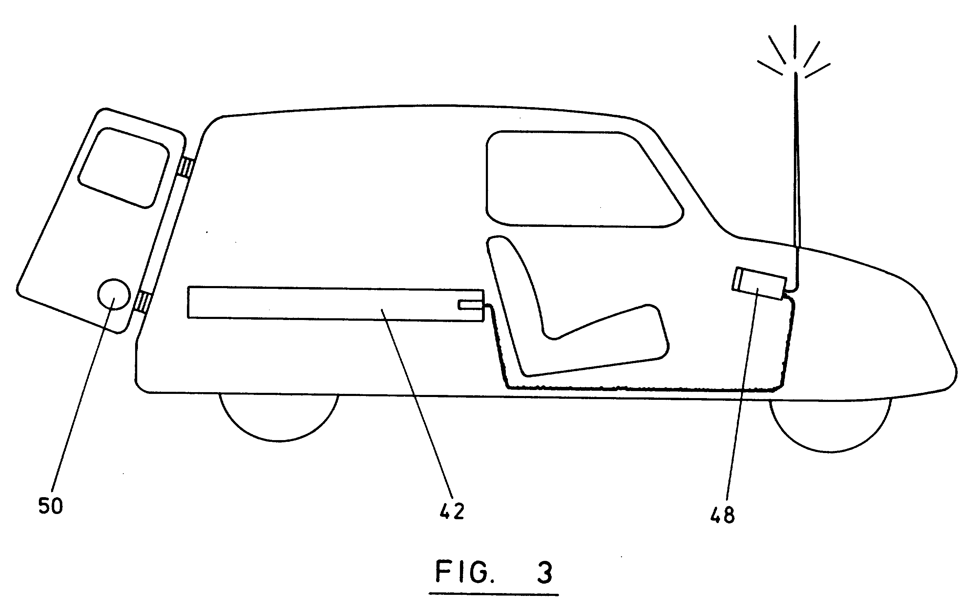

Once the operator has finished on a valve, he lifts the valve key from the valve, removes the tommy bar 38, and locates the valve key and tommy bar in separate holsters in a downloading unit contained within the operator's van. The holster for the tommy bar is shown as 40 in Fig. 2, and that for the valve key is shown as 42. The end face 30 of the valve key is located in proximity to a flat end face 44 of the downloading device, the surfaces 30 and 44 forming an inductive coupling whereby information stored within the memory of the valve key may be yielded up to the vehicle radio 48 (see Fig. 3), and so be transmitted to the valve logging station.

Correct location of the valve key within the holster may be achieved by arranging the rear end of the holster adjacent to the rear door of the van, and mounting on that door, in the correct position, a block 50 of an elastomeric material, which engages the rear (upper) end of the valve key.

When the valve key is located within the holster 42, a connection is made such that when the van is being driven, the valve key battery will be recharged. Furthermore, should be valve key not be placed within the holster, this will be sensed if it is attempted to drive the vehicle, and a visual and/or audible warning is given to the driver.

Referring to Figures 4 to 11 of the accompanying drawings, there are shown features of a second valve key and valve cap assembly according to a second specific embodiment of the present invention.

Referring to Figure 4, a conventional water valve 60 is shown in situ in a water mains access hole 61, the concrete walls 61 of the access hole being shown in cut away view for clarity. In such access hole installations, the base 62 of the conventional valve is often surrounded by an earth or debris floor 63.

The conventional valve 60 is fitted with a valve cap 73, being a specific embodiment according to the present invention. The value cap fits on top of an existing prior art head of the valve, and is adapted to closely fit the head of the valve, such that when the valve cap 67 is rotated, a torque is transmitted from the valve cap via the head of the valve, to turn a spindle of the valve to open or close the valve.

The valve cap is provided with an identification means 64, in the form of an electronic tag, which may be embedded in or otherwise formed in the valve cap.

The valve cap is described in further detail with reference to Figures 5 to 7 hereunder.

Around the body 62 of the valve, is placed a locating collar 65 in the form of a cylindrical annular tube, having a location slot 66 formed in an upright side wall of the collar.

The collar is positioned concentrically with the valve and second cap, to allow enough room for a second embodiment of valve key, as described hereunder, to engage the second cap for turning the valve on or off, and such that the collar may engage with a locating portion of the valve key, to ensure that the second valve key is fitted to the valve in the same reference position each time the second valve key is used.

The collar may be permanently fixed within the manhole by filling a space between the collar and the concrete rings of the manhole wall, with aerosol building foam, such that the collar cannot rotate in the manhole, and the position of the slot in the collar remains fixed.

Referring to Figures 5 to 7 of the accompanying drawings, the valve cap comprises a tubular side wall portion 70 closed at an lower end thereof by a base plate portion 71 which extends across the base of the tubular wall portion. The base plate wall may be formed with an aperture of square pentagonal or of other shape specifically shaped to fit over a particular type of conventional valve head 72. An outwardly facing surface of the cap is provided with first and second step portions 73, 74 respectively which face outwardly tangentially of the generally cylindrical shape of the cap, such that an outer wall of the cap may be defined by a first substantially cylindrical portion 75, of a first radius, and a second substantially cylindrical portion 76 of a second, smaller radius, the step portions 73, 74 joining the outer surfaces of the first and second cylindrical portions. The surfaces of the step portions 73, 74 are preferably vertical, or sloped so as to prevent the settlement of dirt, etc on the step surfaces.

The identification means 64 in the form of an electronic tag, may be embedded in the top portion of the cap, such as to be addressable by a reading and/or programming means placed in close physical proximity with the top portion of the cap. The identification means comprises an electronic tag having a memory capable of storing digital information. The electronic tag is self contained, and does not require a separate power supply mean. When the tag is read or programmed, power may be supplied by inducing currents in the electronic tag by means of a signal emitted by the reading or programming means. Such tags are conventionally available. The tag may be positioned exposed on an upper surface of the cap, or the tag may be fully embedded in the cap.

The cap is preferably formed of a length of steel cylindrical tube, having a base plate closing the lower end, the base plate provided with the shaped aperture. A second tube segment, of larger diameter may be formed concentrically with the first tube to form the step surfaces, and second cylindrical portion. The first and second cylindrical portions and the base may be formed as a single casting.

The cylindrical tube which is initially hollow, is placed over an existing false top, and an electronic tag is placed centrally in the tube, on top of the false top.

The tube is then filled with a resinous or castable material poured around the false top, and over the tag, the material bonding the cap to the false top. The resinous or castable material may be coloured, e.g. blue, to act as a visual indication that the valve is a water valve, and/or that the valve has been electronically tagged. A plastics lid may be provided to cover the resin. The lid may be coloured.

The cap may be moulded or cast from a suitable material, the material selected such as to have sufficient strength and rigidity for transmitting the rotational force from the valve key to the head of the valve, in order to open or close the valve by rotation of the spindle of the valve.

Referring to Figures 8 to 11 of the accompanying drawings, there is shown a second valve key embodiment according to the present invention.

The second valve key comprises an elongate tubular outer casing 80 preferably of aluminium, and having at a lower end thereof a flared portion 81 for fitting over the cap, the flared portion being provided with a locating lug portion 82 for engaging the slot 66 in the collar around the cap; an inner torque transmission tube 83, which is rotatable with respect to the outer casing 80, the torque transmission tube having a lower end adapted for fitment to the second cap and for engagement with the step portions 73, 74 of the second cap for turning the cap clockwise or anticlockwise, the torque transmission tube housing a read head 90 and communication device 91 for communicating with the identification means 64 in the cap, the arrangement being that when the torque transmission tube is placed over the cap the communication means lies in close physical proximity to the identification means, the read head and communication device comprising a means for extracting information from the valve and a means for programming the identification means. The torque transmission tube is provided with a passage 87 for insertion of a bar 84 for turning the torque transmission tube; and at an upper end of the torque transmission tube, there is provided a display, for example an LCD display, for displaying information relating to the identification of and rotational status of the valve, including information as to the location of the valve and whether the valve is on or off and the direction of rotation of the spindle of the valve.

The passage 87, may be lined with a substantially cylindrical liner, comprising a pair of concentric screw threaded cylinders which screw into each other, one being inserted from either side of the passage. The liners may serve the purpose of retaining in axial portion, the outer housing to the inner torque tube.

Referring to Figure 9 of the drawings, a lower portion 100 of the inner torque transmission tube is shown, the lower portion having a one or more interior step surfaces 101 on the inside of the torque transmission tube 83 for matching and engaging with the step surfaces 73, 74 of the cap so that the interior step surfaces of the torque transmission tube are arranged to bear against the step surfaces of the cap, for rotationally turning the cap using the torque transmission tube.

Referring to Figure 9, a lower portion of the second valve key is shown in cross sectional view engaged with the cap.

The cap 63 is attached to a valve head 72, by placing the cap over the valve head and bonding the cap to the head by means of for example a resinous filler or castable adhesive 95, such that the second cap is permanently bonded to the head of the valve.

In Figure 10, the lower portion of the inner torque transmission tube 83 is shown engaged with the second cap. The inner torque tube includes the communication means 91, in the form of an inductive transmitter/receiver which sends a first signal comprising a power supply signal for powering the electronic tag 64, and a second signal comprising an information signal superimposed on the first signal for addressing the tag 64 in the cap. The communications means is connected to an electronics module of the read head 90 for decoding and encoding information which is to be transferred between the communications device 91 and the identification tag 64.

The outer tube 80 is fully rotatable with respect to the inner torque tube 83, such that when the outer tube is in place located within the collar 65 around the valve, with the locating lug 82 engaged in the slot 66 in the collar and the lower end of the torque tube 83 engaging the cap, the tommy bar may be used to rotate the inner torque transmission tube 83 for as many revolutions as necessary to close or open the valve.

The outer tube 80 is provided with a plastics housing 100 containing a plurality of position sensors 101, arranged around an inner circumference of the housing and close to the torque tube 83. For example either 1, 2, 4 or 8 position sensors may be spaced at various positions around the inner circumference of the housing, preferably equally spaced from each other. The inner torque tube 83 is provided with a plurality of position indicating devices 102, which may be for example permanent magnets. The position indicating devices are spaced around an outer circumference of the inner torque tube, and may be embedded into a side wall of the inner torque transmission tube, and may number between 1 to 8 in this embodiment. However, the number and position of the position sensors or position indicating devices may be varied. The position indicating devices may read the position of the inner torque transmission tube with respect to the outer housing, in order to determine the rotational orientation and/or the direction of rotation of the inner torque transmission tube with respect to the outer housing. Data collected on the positional orientation of the inner torque tube with respect to the outer housing tube may be transmitted to and collected by the data logger 110 in the upper portion of the valve key.

The data logger, contained in the upper portion of the valve key may comprise a computer, e.g. a microprocessor of conventional manufacture and may be supplied as a conventional built in unit. Communication of an operator with the data logger may be visually via a display, for example an LCD display, which may be read by an operator of the valve key, and/or information may be down loaded or loaded into the data logger via a military standard communications electrical socket 106. Information may be down loaded or input to the data logger via a personal computer, via the socket and/or into a holster in a support vehicle pending transmission, for example via a radio or standard cellular telephone network link, to a central data logging station, at which positional information of a plurality of valves in a distribution network system may be collected.

The inner torque transmission tube is provided with an electrical connection comprising a brass slip ring 120, for use in recharging internal batteries of the valve key when the valve key is placed in, for example the holster in the support vehicle for powering the data logger and read head electronics.

In other embodiments of the valve key, the locating lug may be provided on a collar around the inner torque tube, and the flared portion of the lower end of the outer tube may be dispersed with. The data logger may be detachable from the torque tube, for storage, maintenance or recharging.

A method of operation of the second embodiment will now be described with reference to Figures 4 to 10 of the accompanying drawings.

When the cap is initially fitted to the head of the valve, the tag may be in an unprogrammed state. The cap may be fitted to the valve head by placing the cap over the valve head and securing thereto by resin or other castable material, such that the cap is permanently fixed to the valve head. As the rotational condition of the valve may be initially unknown, i.e. it may be unknown whether the valve is open, closed or partially open, and as it may be physically difficult to ensure accurate rotational alignment of the cap with respect to the head or spindle of the valve, in practise, the cap may be simply placed over the valve head and set thereto with resin, without aligning the rotational position of the cap with respect to the rotational position of the spindle of the valve.

Further, the directional orientation of the slot 66 in the collar, although fixed, may be arbitrary with respect to the rotational position of the spindle of the valve. The direction of the slot may vary from installation to installation.

On first entering information into the tag, i.e. to program in an initial calibration state of the tag with rotational information regarding to the position of the spindle in the valve and/or whether the valve is open or closed, the tag may be energised by transmission of a power signal from the communication device.

Initially, an operator may key in data relating to a location position of the valve, giving the valve a unique location code from which its location can be uniquely determined. This information may be programmed into the tag via the valve key in order to permanently store this information in the tag, thereby uniquely identifying the valve and/or its location.

Then, by turning the inner torque transmission tube, the operator may close the valve (if required). Rotation of the torque transmission tube with respect to the outer housing is detected by the positional sensors 101, 102 and information from the position sensors is read by the data logger and may be simultaneously transmitted into the tag via the read head and communication device, such that the memory of the identification tag is continuously or intermittently updated with the rotational position of the valve, and/or information regarding whether the valve is open or closed, in order to assign this information to the tag.

The operator, having engaged the locational slot 82 of the outer housing of the valve key with the slot 66 in the collar and having engaged the lower portion of the torque transmission tube 83 with the cap 63, may manually rotate the torque transmission tube to turn the spindle valve either clockwise or anticlockwise or both as appropriate and determine by trial and error whether the valve is open or closed. The operator may turn the valve until it is in a closed position, and this condition may be tested by conventional means, e.g. by listening whether water flows through the pipe or whether water comes out of one end of the pipe.

When the operator is satisfied that the valve is in a fully closed position, he may key in to the data logger, e.g. from a personal computer connected to the valve key, information denoting that the key is in a fully closed position. This may be then transmitted via the communications device to the electronic tag 64 in the cap, in order to program the electronic tag with a binary number designating the closed condition of the valve.

Information regarding the rotational direction necessary to open or close the valve may be stored in the identification tag.

Having programmed the valve cap by the aforementioned method, subsequent operators who wish to open or close the valve may be able, by placing the valve key over the valve and engaging the valve key with the cap, read the data in the cap and immediately determine from the display on the valve key the identity and location of the valve, and the rotational condition of the valve, i.e. whether closed, open or partially closed.

A read operation of a programmed cap will now be described.

An operator places the lower end of the valve key over the cap on the valve and engages the step portions of the cap with the corresponding step portions on the lower part of the inner torque transmission tube of the valve key. The location lug 82 of the valve key is engaged in the slot 66 of the collar surrounding the valve.

The operator may activate the data logger, read head electronics and communications device in the valve key, to read the position of the valve. This may be done by activating the communications device to send a signal to power up the electronic tag in the cap and thereby interrogate the tag.

By use of the above system, the rotational orientation of a plurality of valves may be continuously or intermittently updated at a central logging station, on a time scale of minutes to hours, enabling the rotational status of a large number of valve in a distribution network system to be stored on a computer map in real time, or near real time.

This may provide a significant improvement on prior art systems in which manual reporting of the condition of valves takes place, and in which maps of water network zoning and valve conditions may be up to five years out of date.

The above described embodiments and methods may have an advantage of allowing conversion of a large number of existing valve false tops to valves having programmable identification means,by fitment of caps as described above using unskilled labour. The initialisation and programming of the caps may be performed by a relatively few, skilled technicians.

By provision of a standardised shape cap which fits over a variety of valve heads, a large number of valves may be converted for use with a single valve key. As the shape of the cap may be selected to be specific for any particular user, and of a non-standard shape, unauthorised tampering with valves may be avoided.

## Claims

1. A valve system comprising: a valve (4), rotatable between open and closed conditions; a valve key (2) releasably connectible to the valve to rotate the valve; and means to provide information about the valve comprising an information storage device (10) associated with the valve (4), and a sensing device (28) located in the valve key (2), the sensing device (28) being capable of receiving information from the storage device (10) when the valve key is connected to the valve, the valve key (2) being capable of obtaining information yielded up by each of a plurality of valves (4) ; characterised in that the valve system comprises a central valve logging station, the valve key (2) in turn being adapted to yield the information thereto.

2. A valve system as claimed in Claim 1, in which the valve (4) is fitted with a false top (7) to present a standard configuration to the valve key (2).

3. A valve system as claimed in Claim 2, in which the false top (7) is tapered.

4. A valve system as claimed in Claim 1, associated with a cap (70) adopted to fit onto any one of a set of valve heads, of different shapes.

5. A valve system as claimed in Claim 4, associated with a cap (70) adapted to fit onto a head (72) of the valve, the cap comprising a substantially tubular side wall portion (70) for fitting over the head (72), and a base portion 71 which extends across a lower end of the tubular side wall portion (70).

6. A valve system as claimed in any one of the preceding claims, in which the storage device (10) has a memory capable of being read and/or programmed by a respective reading and/or programming means associated with the valve key (2).

7. A valve system as claimed in any one of the preceding claims, in which the storage device (10) is programmable via the valve key (2) by a signal from an external programming means, said signal comprising a power supply component for supplying power for operation of the storage device and an information component for controlling programming of the storage device (10).

8. A valve system as claimed in any one of the preceding claims, in which the sensing device (28) cooperates with the storage device (10) to provide information uniquely identifying the valve.

9. A valve system as claimed in Claim 8, in which the storage device (10) comprises an electronic tag (64) which is readable by the sensing device (28).

10. A valve system as claimed in any one of the preceding claims, in which the sensing device (28) cooperates with the storage device (10) to provide information about the direction in which the valve has to be rotated to open the valve.

11. A valve system as claimed in any one of the preceding claims, in which the sensing device (28) cooperates with the storage device (10) to provide information about the rotational status of the valve.

12. A valve system as claimed in Claim 11, in which the information about rotational status includes information about how much rotational movement is applied to the valve (4) by the valve key (2).

13. A valve system as claimed in any one of the preceding claims, in which the valve key (2) has means for automatically identifying the valve when the valve key is engaged with the valve.

14. A valve system as claimed in Claim 13, in which the valve key (2) comprises :
reading means (90) for reading information yielded up by the valve; and
programming means (91) for programming an identification means of the valve.

15. A valve system as claimed in Claim 14, further comprising a storage means for storing information relating to an identity or status of the valve.

16. A valve system as claimed in any one of the preceding claims, comprising a display means (110) for displaying information relating to a location and/or status of the valve.

17. A valve system as claimed in Claim 16, having a data logger (110) for storing location and/or status information concerning one or a plurality of valves.

18. A valve system as claimed in any one of the preceding claims, in which the valve key has an outer housing (100) adapted to locate with a locating member at a valve site, such that the outer housing may be positioned in a reference orientation with respect to a valve and the valve site.

19. A valve system as claimed in any one of the preceding claims, in which the storage device (10) and sensing device (28) communicates by inductive coupling.

20. A fluid distribution system comprising a network of conduits and a plurality of valves to control the flow of fluid through the conduits, comprising at least one valve system as claimed in any one of the preceding claims.

21. A fluid distribution system as claimed in Claim 20, in which a valve key is provided with a removable storage device which may be passed to the central valve logging station for downloading of information.

22. A fluid distribution system as claimed in Claim 20 or Claim 21, including radio means for transmitting to the central valve logging station information yielded up to the valve key.

23. A fluid distribution system as claimed in any one of Claims 20 to 22, in which a valve key is provided with a magnetic sensing device for corresponding with an array of magnets on the valve.

24. A fluid distribution system as claimed in Claim 23, in which different valves in the system are provided with different arrays of magnets (101) and a sensing device on the valve key provides an electrical signal when a valve magnet is adjacent to it, the presence or absence of said signals being used to generate a binary number for denoting a valve.

25. A fluid distribution system as claimed in any one of Claims 20 to 24, in which a valve key is provided with means sensitive to a magnet for providing a signal during revolution of the valve key.

26. A fluid distribution system as claimed in Claim 25, in which the valve key comprises upper and lower parts which are engageable together, the two parts being drivingly connected together such that the upper part may rotate the lower parts in a first rotational sense, or in a second, opposite rotational sense, the valve key being provided with means for sensing whether the valve key, and hence the valve, is being rotated in the first or second rotational sense.

## Patentansprüche

1. Ventilsystem mit einem zwischen einer Offenstellung und Schließstellung verdrehbaren Ventil (4), einem zum Verdrehen des Ventils lösbar mit dem Ventil verbindbaren Ventilschlüssel (2) und Mitteln zum Liefern von Informationen über das Ventil, welches eine dem Ventil (4) zugeordnete Informationsspeichervorrichtung (10) und eine in dem Ventilschlüssel (2) angeordnete Sensorvorrichtung (28) hat, die zum Aufnehmen von Informationen von der Speichervorrichtung (10) ausgebildet ist, sofern der Ventilschlüssel mit dem Ventil verbunden ist und bei dem der Ventilschlüssel (2) zum Erhalten von Informationen ausgebildet ist, die von jedem einer Vielzahl von Ventilen (4) gewonnen werden, dadurch gekennzeichnet, dass das Ventilsystem eine zentrale Ventilregistrierstation enthält und der Ventilschlüssel (2) seinerseits dazu ausgebildet ist, die Informationen an diese abzugeben.

2. Ventilsystem nach Anspruch 1, bei dem das Ventil (4) mit einem falschen Kopf (7) versehen ist, um eine Standardkonfiguration für den Ventilschlüssel (2) zu bilden.

3. Ventilsystem nach Anspruch 2, bei dem der falsche Kopf (7) konisch ist.

4. Ventilsystem nach Anspruch 1, welches mit einer Kappe (70) versehen ist, die auf irgendeinem einer Reihe von Ventilköpfen unterschiedlicher Gestalt passt.

5. Ventilsystem nach Anspruch 1, welches mit einer auf einen Kopf (72) des Ventils passenden Kappe (70) versehen ist, wobei die Kappe einen im Wesentlichen rohrförmigen Seitenwandbereich (70) zum Übergreifen des Kopfes (72) und einen Basisbereich (71) hat, welcher sich über ein unteres Ende des rohrförmigen Seitenwandbereiches (70) erstreckt.

6. Ventilsystem nach irgendeinem der vorangehenden Ansprüche, bei dem die Speichervorrichtung (10) einen Speicher hat, der mittels einer entsprechenden Lese- und/oder Programmiereinrichtung, die dem Ventilschlüssel (2) zugeordnet ist, gelesen und/oder programmiert werden kann.

7. Ventilsystem nach irgendeinem der vorangehenden Ansprüche, bei dem die Speichervorrichtung (10) durch den Ventilschlüssel (2) aufgrund eines Signals von einer externen Programmiereinrichtung programmierbar ist, wobei das genannte Signal einen Energiezuführanteil zum Zuführen von Energie zum Betreiben der Speichervorrichtung und einen Informationsanteil zum Steuern der Programmierung der Speichervorrichtung (10) hat.

8. Ventilsystem nach irgendeinem der vorangehenden Ansprüche, bei dem die Sensorvorrichtung (28) mit der Speichervorrichtung (10) zusammenarbeitet, um Informationen ausschließlich zum Identifizieren des Ventils zu liefern.

9. Ventilsystem nach Anspruch 8, bei dem die Speichervorrichtung (10) eine elektronische Markierung (64) auf.weist, die von der Sensorvorrichtung (28) gelesen werden kann.

10. Ventilsystem nach irgendeinem der vorangehenden Ansprüche, bei dem die Sensorvorrichtung (28) mit der Speichervorrichtung (10) zusammenarbeitet, um Informationen darüber zu geben, in welche Richtung das Ventil zum Öffnen des Ventils gedreht werden muss.

11. Ventilsystem nach irgendeinem der vorangehenden Ansprüche, bei dem die Sensorvorrichtung (28) mit der Speichervorrichtung (10) zusammenarbeitet, um Informationen über den Rotationsstatus des Ventils zu liefern.

12. Ventilsystem nach Anspruch 11, bei dem die Information über den Rotationsstatus Informationen darüber enthält, um wieviel das Ventil (4) mittels des Ventilschlüssels (2) verdreht wird.

13. Ventilsystem nach irgendeinem der vorangehenden Ansprüche, bei dem der Ventilschlüssel (2) Mittel zum automatischen Identifizieren des Ventils beim Aufsetzen des Ventilschlüssels auf das Ventil aufweist.

14. Ventilsystem nach Anspruch 13, bei dem der Ventilschlüssel (2) Lesemittel (90) zum Lesen von Informationen, die von dem Ventil abgegeben werden und Programmiermittel (91) zum Programmieren eines Identifikationsmittels des Ventils aufweist.

15. Ventilsystem nach Anspruch 14, welches weiterhin Speichermittel zum Speichern von Informationen aufweist, die sich auf die Identität oder den Status des Ventils beziehen.

16. Ventilsystem nach irgendeinem der vorangehenden Ansprüche, welches Anzeigemittel (110) zum Anzeigen von Informationen über den Ort und/oder den Status des Ventils aufweist.

17. Ventilsystem nach Anspruch 16, welches einen Datenschreiber (110) zum Abspeichern von Informationen über den Ort und/oder den Status eines Ventils oder einer Vielzahl von Ventilen aufweist.

18. Ventilsystem nach irgendeinem der vorangehenden Ansprüche, bei dem der Ventilschlüssel ein äußeres Gehäuse (100) hat, welches dazu ausgebildet ist, auf ein Positionierteil an einem Ventilort positioniert zu werden, so dass das äußere Gehäuse in eine Referenzausrichtung in Bezug auf ein Ventil und den Ventilort gebracht wird.

19. Ventilsystem nach irgendeinem der vorangehenden Ansprüche, bei dem die Speichervorrichtung (10) und Sensorvorrichtung (28) durch eine induktive Verbindung miteinander kommunizieren.

20. Fluidverteilungssystem mit einem Netzwerk von Leitungen und einer Vielzahl von Ventilen zum Steuern des Flusses des Fluids durch die Leitungen, welches zumindest ein Ventilsystem nach irgendeinem der vorangehenden Ansprüche enthält.

21. Fluidverteilungssystem nach Anspruch 20, bei welchem ein Ventilschlüssel mit einer herausnehmbaren Speichervorrichtung versehen ist, welche zu der zentralen Ventilregistrierstation zum Herunterladen der Informationen geführt werden kann.

22. Fluidverteilungssystem nach den Ansprüchen 20 oder 21, welches Funkmittel zum Übertragen von zum Ventilschlüssel abgegebenen Informationen zu der zentralen Ventilregistrierstation hat.

23. Fluidverteilungssystem nach irgendeinem der Ansprüche 20 bis 22, bei dem der Ventilschlüssel mit einer zum Überdecken mit einer Reihe von Magneten auf dem Ventil ausgebildeten, magnetischen Sensorvorrichtung versehen ist.

24. Fluidverteilungssystem nach Anspruch 23, bei welchem unterschiedliche Ventile des Systems mit unterschiedlichen Reihen von Magneten (101) versehen sind und bei dem eine Sensorvorrichtung auf dem Ventilschlüssel ein elektrisches Signal liefert, wenn ein Ventilmagnet sich neben ihr befindet, wobei die Anwesenheit oder Abwesenheit der genannten Signale dazu benutzt wird, um eine binäre Zahl zum Bezeichnen eines Ventils zu erzeugen.

25. Fluidverteilungssystem nach irgendeinem der Ansprüche 20 bis 24, bei dem ein Ventilschlüssel mit auf einen Magneten ansprechenden Mitteln versehen ist, um während der Drehung des Ventilschlüssels ein Signal zu erzeugen.

26. Fluidverteilungssystem nach Anspruch 25, bei dem der Ventilschlüssel obere und untere Teile aufweist, welche ineinander einzugreifen vermögen, wobei die beiden Teile getrieblich miteinander verbunden sind, so dass das obere Teil die unteren Teile in einem ersten Drehsinn oder zweiten, entgegengesetzten Drehsinn verdrehen kann und bei welchem der Ventilschlüssel mit Mitteln versehen ist, die dazu dienen festzustellen, ob der Ventilschlüssel und deshalb auch das Ventil im ersten oder zweiten Drehsinn verdreht wird.

## Revendications

1. Système de vanne comprenant : une vanne (4), pivotant entre des positions ouverte et fermée, une clé de vanne (2) venant en prise libérable avec la vanne pour faire tourner la vanne ; et des moyens pour fournir des informations relatives à la vanne comprenant un dispositif de stockage d'informations (10) associé à la vanne (4), un dispositif de détection (28) situé dans la clé de vanne (2), le dispositif de détection (28) étant capable de recevoir des informations du dispositif de stockage (10) lorsque la clé de vanne est connectée à la vanne ; la clé de vanne (2) étant capable d'obtenir des informations fournies individuellement par chaque vanne d'un ensemble de vannes (4), caractérisé en ce que le système de vanne comprend une station centrale d'enregistrement de vanne, la clé de vanne (2) étant, de son côté, adaptée à lui livrer des informations.

2. Système de vanne selon la revendication 1, dans lequel la vanne (4) est munie d'une pièce d'extrémité factice (7) de manière à présenter une configuration standard à la clé de vanne (2).

3. Système de vanne selon la revendication 2, dans lequel la pièce d'extrémité factice (7) est effilée.

4. Système de vanne selon la revendication 1, associé à une coiffe (70) choisie de manière à s'adapter sur n'importe quelle tête de vanne d'un jeu de vannes, de formes différentes.

5. Système de vanne selon la revendication 4, associé à une coiffe (70) choisie de manière à venir s'adapter sur la tête (72) de la vanne, la coiffe comprenant une portion de paroi latérale substantiellement tubulaire (70) pour s'adapter sur la tête (72), et une portion de base (71) s'étendant d'un côté à l'autre d'une extrémité inférieure de la portion de paroi latérale tubulaire (70).

6. Système de vanne selon l'une quelconque des revendications précédentes, dans lequel le dispositif de stockage (10) a une mémoire capable d'être lue et/ou programmée par des moyens respectivement de lecture et/ou de programmation associés à la clé de vanne (2).

7. Système de vanne selon l'une quelconque des revendications précédentes, dans lequel le dispositif de stockage (10) est programmable par l'intermédiaire de la clé de vanne (2) par un signal provenant de moyens de programmation externes, ledit signal comprenant un élément fournisseur de courant pour fournir le courant nécessaire au dispositif de stockage (10) et un élément d'informations pour commander la programmation du dispositif de stockage (10).

8. Système de vanne selon l'une quelconque des revendications précédentes, dans lequel le dispositif de détection (28) coopère avec le dispositif de stockage (10) pour fournir des informations identifiant uniquement la vanne.

9. Système de vanne selon la revendication 8, dans lequel le dispositif de stockage (10) comprend une étiquette électronique (64) qui est lisible par le dispositif de détection (28).

10. Système de vanne selon l'une quelconque des revendications précédentes, dans lequel le système de détection (28) coopère avec le système de stockage (10) pour fournir des informations sur la direction dans laquelle la vanne doit être tournée pour ouvrir la vanne.

11. Système de vanne selon l'une quelconque des revendications précédentes, dans lequel le dispositif de détection (28) coopère avec le dispositif de stockage (10) pour fournir des informations concernant l'état de rotation de la vanne.

12. Système de vanne selon la revendication 11, dans lequel les informations sur l'état de rotation incluent des informations sur l'amplitude du mouvement de rotation qui est appliqué à la vanne (4) par la clé de vanne (2).

13. Système de vanne selon l'une quelconque des revendications précédentes, dans lequel la clé de vanne (2) possède des moyens pour identifier automatiquement la vanne lorsque la clé de vanne est en prise avec la vanne.

14. Système de vanne selon la revendication (13), dans lequel la clé de vanne (2) comprend :
des moyens de lecture (90) pour lire les informations remontées par la vanne ; et
des moyens de programmation (91) pour programmer un moyen d'identification de la vanne.

15. Système de vanne selon la revendication 14, comprenant de plus un moyen de stockage pour stocker les informations concernant une identité ou l'état de la vanne.

16. Système de vanne selon l'une quelconque des revendications précédentes, comprenant un moyen d'affichage (110) pour afficher les informations concernant une position et/ou un état de la vanne.

17. Système de vanne selon la revendication 16, possédant un enregistreur de données (110) pour stocker les informations de localisation et/ou d'état concernant une ou plusieurs vannes.

18. Système de vanne selon l'une quelconque des revendications précédentes, dans lequel la clé de vanne a un logement externe (100) adapté à être positionné au moyen d'un élément de positionnement en un emplacement de vanne, de telle sorte que le logement externe puisse être positionné dans une orientation de référence par rapport à une vanne et à l'emplacement de la vanne.

19. Système de vanne selon l'une quelconque des revendications précédentes, dans lequel le dispositif de stockage (10) et le dispositif de détection (28) communiquent par couplage inductif.

20. Système de distribution d'un fluide, comprenant un réseau de conduits et une pluralité de vannes pour contrôler le flux du fluide à travers les conduits, comprenant au moins un système de vanne selon l'une quelconque des revendications précédentes.

21. Système de distribution d'un fluide selon la revendication 20, dans lequel la clé de vanne est pourvue d'un dispositif de stockage amovible qui peut être transféré à la station centrale d'enregistrement de vanne pour le téléchargement d'informations.

22. Système de distribution d'un fluide selon les revendications 20 ou 21, incluant un moyen radio pour transmettre à la station centrale d'enregistrement de vanne les informations remontées jusqu'à la clé de vanne.

23. Système de distribution d'un fluide selon l'une quelconque des revendications 20 à 22, dans lequel la clé de vanne est pourvue d'un dispositif magnétique de détection pour correspondre avec un arrangement d'aimants sur la vanne.

24. Système de distribution d'un fluide selon la revendication 23, dans lequel différentes vannes dans le système sont pourvues de différents arrangements d'aimants (101) et un dispositif de détection sur la clé de vanne fournit un signal électrique lorsqu'un aimant de vanne lui est adjacent, la présence ou l'absence desdits signaux étant utilisé pour générer un nombre binaire pour indiquer une vanne.

25. Système de distribution d'un fluide selon l'une quelconque des revendications 20 à 24, dans lequel la clé de vanne est pourvue d'un moyen sensible à un aimant pour donner un signal pendant la révolution de la clé de vanne.

26. Système de distribution d'un fluide selon la revendication 25, dans lequel la clé de vanne comprend des éléments supérieur et inférieur qui peuvent venir en prise, les deux éléments étant connectés de manière à être entraînés ensemble de telle sorte que l'élément supérieur puisse faire tourner l'élément inférieur dans un premier sens de rotation, ou dans un second sens de rotation inverse, la clé de vanne présentant des moyens pour détecter si la clé de vanne, et en conséquence la vanne, est tournée dans le premier ou le second sens de rotation.
